# EUROPÄISCHE PATENTSCHRIFT

(11) **EP 0 355 778 B1**
(45) Veröffentlichungstag und Bekanntmachung des Hinweises auf die Patenterteilung: **22.12.1993**
(21) Anmeldenummer: 89115423.9
(22) Anmeldetag: 22.08.1989
(51) Int. Cl.: H02K 15/02, H01F 41/02

(54) **Verfahren und Vorrichtung zum Verkleben (Verbacken) von gestanzten Elektroblechen**
Method and device for bonding (curing) punched plates for electric machines
Méthode et dispositif pour le collage (la cuisson) de tôles pour machines électriques

(30) Priorität: 25.08.1988 DE 3829068
(43) Veröffentlichungstag der Anmeldung: 28.02.1990
(73) Patentinhaber: L. SCHULER GmbH, D-73012 Göppingen (DE)
(72) Erfinder: Böttner, René, D-3418 Uslar 1 (DE)

(56) Entgegenhaltungen:
- DE-A- 2 632 382
- FR-A- 2 361 767
- FR-A- 2 487 597

## Beschreibung

Die Erfindung betrifft ein Verfahren zum Verkleben (Verbacken) von mit einer Klebstoffisolierschicht (Backlack) versehen Elektroblechen gemäß dem Oberbegriff des Anspruch 1 sowie eine Vorrichtung gemäß dem Oberbegriff des Anspruchs 4.

Aus der US-PS 2 889 058 ist es bekannt, Statorbleche manuell zu stapeln oder auch mechanisch zu stapeln, wobei diese mit einem Isolierlack beschichtet sind. Die Verspannung des Stapels, d.h. die Verbindung der einzelnen Bleche erfolgt mechanisch. Es wird zwar auch darauf hingewiesen, daß Klebstoff zwischen den einzelnen Blechen vorgesehen sein kann, aber dieser dient in Form von einzelnen punktförmigen Klebestellen nur zur Vermeidung von Vibrationen.

Aus der DE-OS 27 33 987 ist die Schichtung von Statorkern-Stanzteilen bekannt, wobei diese Stanzteile mit einer Klebeschicht beschichtet sind, und zwar einem sogenannten Backlack, der nach dem Stapeln und unter Anwendung von Druck und einer erhöhten Temperatur, die in diesem Fall bei 130 bis 170 ° C liegt, zu einem Verkleben oder Verbacken der einzelnen Bleche führt.

Schließlich ist aus der DE-OS 30 27 987 ein Arbeitsverfahren und eine Einrichtung zum Paketieren von Dynamoblechen bekannt, wobei diese Einrichtung im wesentlichen einen Drehtisch aufweist mit einzelnen Arbeitspositionen, von denen eine zum Herstellen der Stanzteile dient und an anderer Position die Bleche gestapelt werden. Bei dieser Vorrichtung werden die den Stapel bildenden Bleche nach dem Pressen verschweißt.

Aus der Praxis sind auch derartige Stanzautomaten bekannt, bei denen in einer Position die einzelnen Bleche gestantz werden und es erfolgt dann in einer weiteren Ablagestation das Ablegen der einzelnen Stanzteile mittels eines hydraulischen Preßstempels, wobei hier im allgemeinen ein Druck von ca. 150 N/cm² angewandt wird. In dieser Station wird auch die Gesamthöhe des Stanzstapels gemessen, da die Höhe des gestanzten Stapels wichtig für die Weiterverarbeitung ist, und zwar einerseits beim Aluminiumguß und andererseits für die Maßhaltigkeit und Kegeltreue beim Stanzen von aufeinanderfolgenden Blechen mit größer oder kleiner werdendem Außen- und/oder Innendurchmesser, so daß Stapel mit konischem Querschnitt entstehen. Ist in der Ablagestation die Fertighöhe erreicht, wird der gestanzte Blechstapel aus dem Stanzautomaten herausgenommen und es erfolgt in einer hydraulischen Preßvorrichtung oder einer Spannvorrichtung ein Verspannen dieses Stapels. Anschließend wird der Stapel in einem Ofen oder einer Induktionsanlage auf eine Temperatur von bis zu 210 ° C erwärmt, wobei diese Temperatur abhängig ist von der Reaktionstemperatur des verwendeten Backlackes.

Die bei dieser Arbeitsweise benutzten Spannvorrichtungen sind einerseits sehr aufwendig und zum anderen treten relativ große Zeit-und Wärmeverluste auf bedingt durch das Fertigstellen des Stapels zunächst in der Ablagestation und das dann in einer gesonderten Station erfolgende Erwärmen.

Der Erfindung liegt daher die Aufgabe zugrunde, ein Verfahren und eine Vorrichtung zu schaffen, mit dem bzw. der der Zeit- und Energieaufwand wesentlich verringert werden kann.

Gelöst wird diese Aufgabe mit den Merkmalen im Kennzeichen des Anspruchs 1 bzw. Anspruchs 4. Die Merkmale in den Ansprüchen 2, 3, 5 und 6 stellen vorzugsweise Ausgestaltungen dar.

Der wesentliche Gedanke der Erfindung ist darin zu sehen, daß die einzelnen Bestandteile während des Ablegevorgangs durch den Preßstempel beheizt werden und daß dann ein Verbacken der einzelnen Stanzteile vorgenommen wird und nicht des gesamten Stapels nach Erreichen der Fertighöhe. Auf diese Weise ist es möglich, die zeitliche Abfolge innerhalb der Taktzeit des Stanzautomaten aufeinander abzustimmen und dies ermöglicht den Einsatz des erfindungsgemäßen Verfahren bzw. die Abänderung bestehender Stanzautomaten im Sinne des Vorrichtungsanspruches ohne wesentliche Änderungen und unter Beibehaltung der Taktzeiten, mit denen diese Automaten bereits laufen.

Die Erfindung soll nachfolgend anhand der Zeichnungen erläutert werden, wobei die
Fig. 1 eine vereinfachte Aufsicht auf einen Stanzautomaten
Fig. 2 eine Seitenansicht
Fig. 3 einen Schnitt durch den Pressenteil des Stanzautomaten und
Fig. 4 eine Aufsicht auf das Pressenunterteil zeigen.

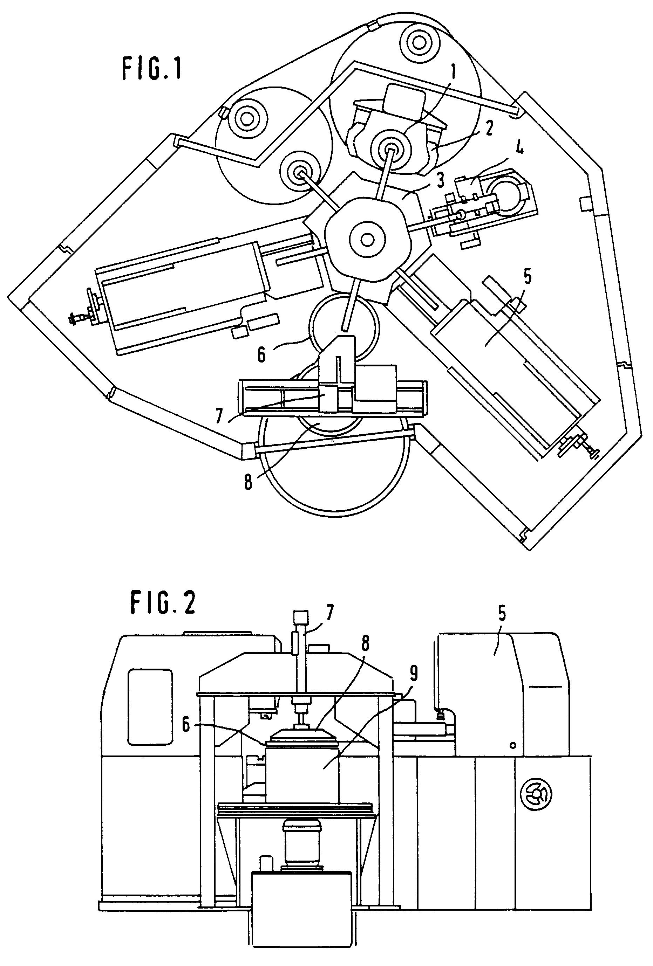

Die Arbeitsweise des Stanzautomaten ist wie folgt:
Zunächst werden von einem Stapel 1 mit einer magnetischen Übergabeeinrichtung 2 einzelne Bleche an einen Transportstern 3 übergeben. Der Transportstern 3 taktet im 60-Grad-Takt diese Teile über eine Orientierungsstation 4 zur Stanze 5. Diese Stanze 5 stellt die einzelnen Stanzteile her, und diese werden dann vom Transportstern 3 zur Ablagestation befördert. Hier erfolgt eine Ablage des Stanzteiles in einer sogenannten Übergabeschwenkbrille 6, die sich anschließend um 180 Grad dreht und das Stanzteil in eine Ablage- und Meßvorrichtung einbringt. Diese Vorrichtung, die in der Figur 2 in der Seitenansicht dargestellt ist, besteht im wesentlichen aus einem Hydraulikzylinder 7, einem Druckteller oder Preßstempel 8 und einer Zentriereinheit oder Aufnahme 9. In dieser Einheit erfolgt das Verbacken der einzelnen Stanzteile. Hierbei werden bei jedem Ablege- und Meßvorgang die einzelnen Stanzteile durch den Kontakt mit dem beheizten Preßstempel erwärmt. Dabei erreicht die an der Stanzteilunterseite angebrachte Klebstoffisolationsschicht (Backlack) die erforderliche Reaktionstemperatur und unter dem Druck des Preßstempels werden die einzelnen Stanzteile im Takt der Stanze in der Zentriereinheit bzw. -aufnahme verklebt (verbackt). Ist die vorgeschriebene Pakethöhe erreicht, wird der Stapel aus der Ablege- und Meßstation herausgenommen und in eine Abkühlstation eingespannt. Während des nächste Paket verbackt wird, erfolgt das Abkühlen mit Luft in der Abkühlstation, wobei die Luft hier mit einem Gebläse für eine schnelle Abkühlung zugeführt werden kann. Es hat sich gezeigt, daß Elektrobleche mit Beschichtungen bereits nach einer sehr kurzen Kontaktzeit von 0,5 bis 1,0 sec. mit dem ca. 360 ° C warmen Preßstempel und einer Druckkraft von ca. 150 N/cm² gut aufeinander haften. Das auf diese Weise verbackte Bleckpaket wurde anschließend in einer einfachen Spanneinrichtung mit Gewindestangen 15 Minuten gehalten und kühlte dabei ab. Wie sich aus den obigen Werten ergibt, ist es von besonderer Bedeutung, daß die Stanzzeit eines einzelnen Bleches mit der Kontaktzeit beim Pressen übereinstimmt und die eingeplante Abkühlzeit mit der Stanzzeit eines Paketes, so daß auf diese Weise das Verfahren in bestehende Einrichtungen integriert werden kann, ohne daß eine Änderung der jeweiligen Taktzeiten notwendig ist.

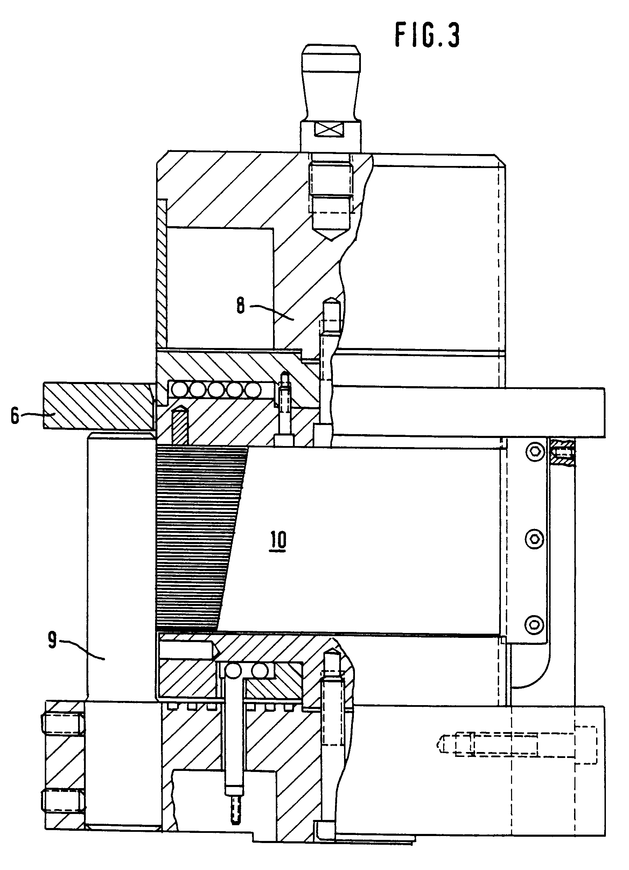

Die Fig. 3 zeigt den Preßstempel 8 durchgetaucht durch die Übergabeschwenkbrille 6 auf das verbackene Statorpaket (Werkstück) 10 pressend.

Der Preßstempel 8 ist dargestellt mit angeschraubtem Einspannzapfen zur Befestigung in dem Hydraulikzylinder 7 aus Fig 2. Der Preßstempel 8 besteht aus Ober- und Unterteil. Die Teile sind mit einer zentrischen Schraube verbunden. Zwischen Ober- und Unterteil ist eine Wärmeisolierschicht eingebaut. Im Unterteil ist die elektrisch beheizte, geregelte Spule eingebaut. Zur sicheren Übergabe der Statorbleche von der Übergabeschwenkbrille 6 in die Aufnahme 9 sind am Preßstempel-Unterteil Magnete eingebaut.

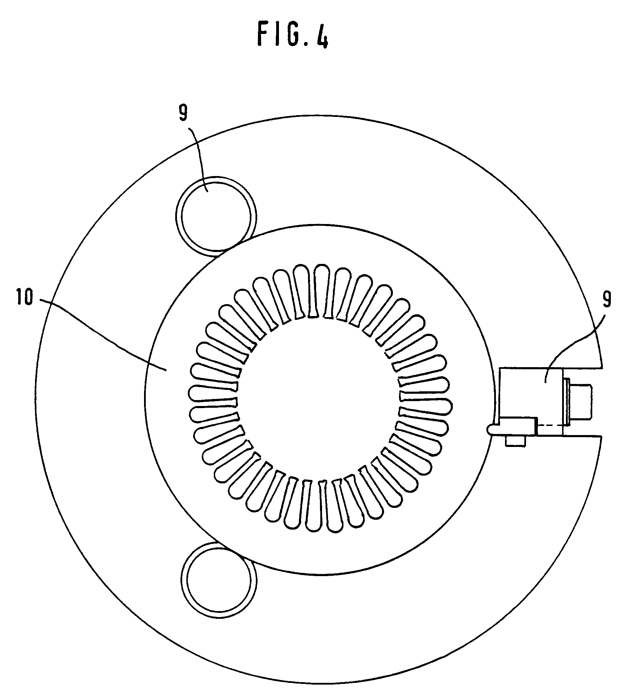

Fig. 4 zeigt ein Statorpaket (Werkstück) 10 in der Aufnahme 9 gehalten. Die Aufnahme 9 besteht aus einer geteilten Grundplatte mit zwei Führungssäulen und einer Zentrierleiste. In das Oberteil der Grundplatte ist ebenfalls eine elektrisch beheizte, geregelte Spule eingebaut. Dieses Oberteil ist vom Unterteil mit einer Wärmeisolierschicht getrennt.

## Patentansprüche

1. Verfahren zum Verkleben (Verbacken) von mit einer Klebstoffisolierschicht (Backlack) versehen in einem Automaten gestanzten Elektroblechen, wobei die einzelnen Stanzteile aufeinander gelegt und unter dem Einfluß von Wärme und axialem Druck miteinander verklebt (verbackt) werden, **dadurch gekennzeichnet,** daß jedes einzelne Stanzteil während des Ablegens auf die Raektionstemperatur des Backlackes erwärmt und dann sofort auf das vorher abgelegte Stanzteil aufgepreßt wird und daß anschließend der die gewünschte Höhe aufweisende Stapel (1) abgekühlt wird.

2. Verfahren nach Anspruch 1, **dadurch gekennzeichnet,** daß die Stanzteile während einer Kontaktzeit von 0,5 bis 1,0 sec. von dem ca. 360 ° C warmen Preßstempel (8) erwärmt werden.

3. Verfahren nach einem der Ansprüche 1 oder 2, **dadurch gekennzeichnet,** daß die Backlackbeschichtung, die Kontaktzeit, die Erwärmung und die Preßkraft so aufeinander abgestimmt werden, daß die Taktzeit, während der die Teile gestanzt werden, der Taktzeit entspricht, während der die Stanzteile verklebt (verbackt) werden und daß die Abkühlzeit eines Stapels (1) der Stanz- und Backzeit eines weiteren Stapels entspricht.

4. Vorrichtung zum Verkleben (Verbacken) von mit einer Klebstoffisolierschicht (Backlack) versehenen Elektroblechen, die in einem Automaten taktweise zunächst einer Stanze (5) und dann einer Ablege- und Meßstation zugeführt werden und die anschließend mittels eines Preßstempels (8) unter Wärmeeinfluß zu Blechpaketen verbackt werden, **dadurch gekennzeichnet,** daß der Preßstempel (8) der Ablege- und Meßstation mit einer Heizvorrichtung versehen ist.

5. Vorrichtung nach Anspruch 4, **dadurch gekennzeichnet,** daß sowohl am Preßstempel (8) wie auch in der Aufnahme beheizbare Kontaktplatten vorgesehen sind.

6. Vorrichtung nach den Ansprüchen 4 und 5, **dadurch gekennzeichnet,** daß der Ablege- und Meßstation eine Abkühlstation nachgeordnet ist.

## Claims

1. Process for bonding (baking) together electric steel sheets which are provided with an insulating layer of adhesive (baking lacquer) and are stamped in an automatic machine, the individual stamped metal parts being placed one on top of the other and being bonded (baked) together under the influence of heat and axial pressure, characterized in that each individual stamped metal part, whilst it is being deposited, is heated to the reaction temperature of the baking lacquer and then pressed immediately onto the previously deposited stamped metal part, and in that the stack (1) having the desired height is then cooled down.

2. Process according to Claim 1, characterized in that the stamped metal parts are heated, during a contact time of 0.5 to 1.0 sec., by the warm press ram (8), which is at a temperature of about 360°C.

3. Process according to either of Claims 1 or 2, characterized in that the baking lacquer coating, the contact time, the heating and the compression force are mutually coordinated such that the cycle time during which the parts are stamped corresponds to the cycle time during which the stamped metal parts are bonded (baked) together, and in that the cooling time of one stack (1) corresponds to the stamping and baking time of a further stack.

4. Device for bonding (baking) together electric steel sheets which are provided with an insulating layer of adhesive (baking lacquer) and are fed in an automatic machine, in cycles, firstly to a stamping machine (5) and then to a depositing and measuring bay and are then baked together by means of a press ram (8), under the influence of heat, into lamination bundles, characterized in that the press ram (8) of the depositing and measuring bay is provided with a heating apparatus.

5. Device according to Claim 4, characterized in that heatable contact plates are provided both on the press ram (8) and in the receiving fixture.

6. Device according to Claim 4 and 5, characterized in that downstream from the depositing and measuring bay there is disposed a cooling bay.

## Revendications

1. Procédé pour coller (lier par cuisson) des tôles électriques pourvues d'une couche isolante de colle (laque à cuire) et estampées dans une machine automatique où les pièces estampées individuelles sont déposées les unes sur les autres et sont collées (liées) les unes aux autres sous l'effet de la chaleur et d'une pression axiale, **caractérisé** en ce que chaque pièce estompée individuelle est chauffée à la température de réaction de la laque pendant qu'on la dépose, puis est immédiatement pressée sur la pièce estampée déposée auparavant, et ensuite la pile (1) présentant la hauteur voulue est refroidie.

2. Procédé selon la revendication 1 **caractérisé** en ce que les pièces estampées sont chauffées durant un temps de contact de 0,5 à 1,0 s par le poinçon de pressage (8) chauffé à environ 360°C.

3. Procédé selon l'une des revendications 1 ou 2, **caractérisé** en ce que le revêtement de laque, le temps de contact, le chauffage et la force de pressage sont mutuellement accordés de telle manière que la durée de la phase du cycle dans laquelle les pièces sont estampées correspond à la durée de phase du cycle dans laquelle les pièces estampées sont collées (liées) et en ce que la durée de refroidissement d'une pile (1) correspond à la durée d'estampage et de cuisson d'une pile suivante.

4. Dispositif pour coller (lier par cuisson) des tôles électriques pourvues d'une couche isolante de colle (laque à cuire) qui, dans une machine automatique, sont amenées cycliquement d'abord à une estampeuse (5) puis à un poste de dépôt et de mesure et sont ensuite liées en paquets de tôles par cuisson au moyen d'un poinçon de pressage (8) sous l'effet de la chaleur, **caractérisé** en ce que le poinçon de pressage (8) du poste de dépôt et de mesure est pourvu d'un dispositif de chauffage.

5. Dispositif selon la revendication 4, **caractérisé** en ce que des plaques de contact chauffées sont prévues aussi bien sur le poinçon de pressage (8) que dans le récepteur.

6. Dispositif selon l'une des revendications 4 et 5, **caractérisé** en ce que le poste de dépôt et de mesure est suivi d'un poste de refroidissement.
